# EUROPEAN PATENT APPLICATION

(11) **EP 2 450 894 A2**
(43) Date of publication of application: **09.05.2012**
(21) Application number: 10794351.6
(22) Date of filing: 30.06.2010
(51) Int. Cl.: G11B 20/10, G11B 19/02

(54) **SIGNAL CONVERSION DEVICE EMPLOYING VIRTUAL FILES**

(30) Priority: 01.07.2009 KR 20090059736
(71) Applicant: Digiparts.lnc., Seongnam-si, Gyeonggi-do 463-480 (KR)
(72) Inventor: JUNG, Sung Ill, Suwon-si Gyeonggi-do 443-470 (KR); JUNG, Jin Hwan, Yongin-si Gyeonggi-do 449-812 (KR)
(74) Representative: Hocking, Adrian Niall
(86) International application number: PCT/KR2010/004235
(87) International publication number: WO 2011/002216

(57) **Abstract**

Provided is a simple connection path through which a peripheral device connects to a screen display or speaker of an external device. A signal converting apparatus using a faking file of the present invention includes: a connection unit connected with the external device; a signal reception unit receiving a digital or analog signal from the peripheral device via wired or wireless communication; and a control unit transmitting a faking file corresponding to the signal to the external device through the connection unit when the signal reception unit receives the signal from the external device, the faking file including one or both of audio data and video data.

## Description

### BACKGROUND OF THE INVENTION

The present invention disclosed herein relates to a technology for controlling a screen display or sound using a faking file and a USB recognition function utilized in a car audio, and more particularly, to a signal converting apparatus using a faking file such that peripheral devices are connected or disconnected actively according to a priority order which is set by a user.

Currently, media for playing and storing sounds having a format such as MP3, WMA, and OGG, which are more accessible, storable, and portable than existing audio CDs, are actively developed with much interest as sound reproducing techniques are developed.

According to this trend, for a car audio, a demand on reproduction equipment of sounds having a file format instead of existing tapes or CDs is increased. In Korean Patent Publication No. 2006-067564 and Korean Patent Publication No. 2004-105668, disclosed are car audio apparatuses capable of reproducing audio files stored in the external USB memory device.

If a navigation device, a DVD player, a handsfree, or a front or back distance sensor which is an option and not installed at that time when the vehicle was manufactured is equipped to transmit sound signals to a car speaker through a car audio, whenever necessary, a sound output terminal of the device should be inconveniently connected to an AUX terminal of the car audio, connected to a terminal on the back side of the car audio after detaching the car audio, or connected to an inner terminal after disassembling the car audio.

To solve this inconvenience, well-known in public is a technique providing a separate port for connecting with the various option devices in a car audio itself or, an apparatus which outputs sound signals of the option devices at a specific frequency such that the radio of the car audio can receive the signals.

However, there are some limitations in which a car audio can operate only in a radio mode which a specific frequency signal can be received when a frequency signal is used, and necessarily output noise. And also, when the car audio has a separate connection port, the car audio itself should be replaced.

### SUMMARY OF THE INVENTION

The present invention provides a signal conversion apparatus using a faking file which provides a simple connection path, thereby connecting with the inner wiring with complicated wirings being excluded when a peripheral device uses a speaker of a vehicle connected to a car audio.

The present invention also provides a signal conversion apparatus using a faking file which may use a typical car audio capable of operating a USB memory and does not require a car audio having a special configuration when various peripheral devices are connected to the car audio.

The present invention also provides a signal conversion apparatus using a faking file which may deliver an audio or video signal to a car audio and also be utilized as a handsfree, a front or back distance alarm device, and a self diagnosis device.

The present invention also provides a signal conversion apparatus using a faking file which enables an audio signal of a peripheral device to be output to a speaker through a car audio by manipulate only the peripheral device without the car audio being separately manipulated.

Embodiments of the present invention provide a signal converting apparatus using a faking file including: a connection unit connected with an external device; a signal reception unit receiving a digital or analog signal from a peripheral device via wired or wireless communication; and a control unit generating a faking file corresponding to the signal and transmitting the faking file to the external device through the connection unit when the signal reception unit receives the signal from the external device, the faking file including one or both of audio data and video data.

In some embodiments, the control unit may add data corresponding to a predetermined condition to the faking file and transmits the faking file to the external device through the connection unit when the signal reception unit receives the signal from the peripheral device and the signal satisfies the predetermined condition.

In other embodiments, where the peripheral device is a cell phone, the signal reception unit may be connected to the cell phone via Bluetooth communication to receive a reception voice signal of the cell phone and the name or phone number of a recipient, and the faking file may have the reception voice signal decoded to a format of the faking file as data, and the name or phone number of the recipient as the file name.

In still other embodiments, where the peripheral device is an output device of a sound signal, data of the faking file may be the sound signal decoded to a format of the faking file.

In even other embodiments, where the sound signal is an analog sound signal, the control unit may convert the analog sound signal into a digital sound signal, and the data of the faking file may be the digital sound signal decoded to the format of the faking file.

In yet other embodiments, where the peripheral device is a front or rear distance sensor, the predetermined condition may be that a distance from an object through a signal received from the distance sensor is in a certain range, the data may be an alarm sound stored in the control unit corresponding to a distance from the object, and the name of the faking file may be the distance from the object.

In further embodiments, where the peripheral device is a vehicular sensor, the predetermined condition may be that a signal received from the vehicular sensor satisfies a failure condition of the vehicle, the data may be an alarm sound stored in the control unit corresponding to a kind of the failure, and the name of the faking file may be information on the failure.

In still further embodiments, the control unit may enable a message predetermined corresponding to the signal to be the name of the faking file.

In even further embodiments, the control unit may electrically disconnect communication between the connection unit and the external device when the faking file is not transmitted to the external device, and electrically connect the communication between the connection unit and the external device when the faking file is transmitted to the external device.

In yet further embodiments, the connection unit may include a USB output terminal for USB communication with the external device, and the control unit may include a USB communication controller, the control unit electrically connecting or disconnecting the communication between the connection unit and the external device by activating or deactivating a USB pull-up resistor.

In much further embodiments, the signal reception unit may be configured as two or more, and the control unit may prioritize the signal reception units, and when signals are received from two or more of the signal reception unit, transmit only data corresponding to a signal with high priority to the external device.

In other embodiments of the present invention, an operating method of a signal conversion apparatus using a faking file includes: a first step of supplying power to an external device, connecting the signal conversion apparatus using the faking file to the external device, and deactivating communication therebetween; a second step of receiving an analog or digital signal from a peripheral device connected to the signal conversion apparatus using the faking file via wired or wireless communication; a third step of generating, by the signal conversion apparatus, generating a faking file with audio or video data and file name corresponding to the signal; a fourth step of activating, by the signal conversion apparatus, communication with the external device; a fifth step of transmitting, by the signal conversion apparatus, the faking file to the external device; and a sixth step of playing back, by the external device, the faking file.

In some embodiments, where the signal satisfies a predetermined condition of the signal conversion apparatus in the third step, the signal conversion apparatus may generate the faking file.

In other embodiments, the method may further include: a seventh step of stopping receiving the signal; and an eighth step of disconnecting, by the signal conversion apparatus, communication with the external device.

In still other embodiments, the method may further include: a seventh step of receiving the signal not satisfying the predetermined condition; and an eighth step of disconnecting, by the signal conversion apparatus, communication with the external device.

### BRIEF DESCRIPTION OF THE DRAWINGS

The accompanying drawings are included to provide a further understanding of the present invention, and are incorporated in and constitute a part of this specification. The drawings illustrate exemplary embodiments of the present invention and, together with the description, serve to explain principles of the present invention. In the drawings:

FIG. 1 is a concept view illustrating a signal converting apparatus using a faking file according to an embodiment of the present invention; and

FIG. 2 is a flowchart of a processing method of the signal converting apparatus using the faking file according to an embodiment of the present invention.

### DETAILED DESCRIPTION OF PREFERRED EMBODIMENTS

Preferred embodiments of the present invention will be described below in more detail with reference to the accompanying drawings. The present invention may, however, be embodied in different forms and should not be constructed as limited to the embodiments set forth herein. Rather, these embodiments are provided so that this disclosure will be thorough and complete, and will fully convey the scope of the present invention to those skilled in the art.

Hereinafter, it will be described about an exemplary embodiment of the present invention in conjunction with the accompanying drawings.

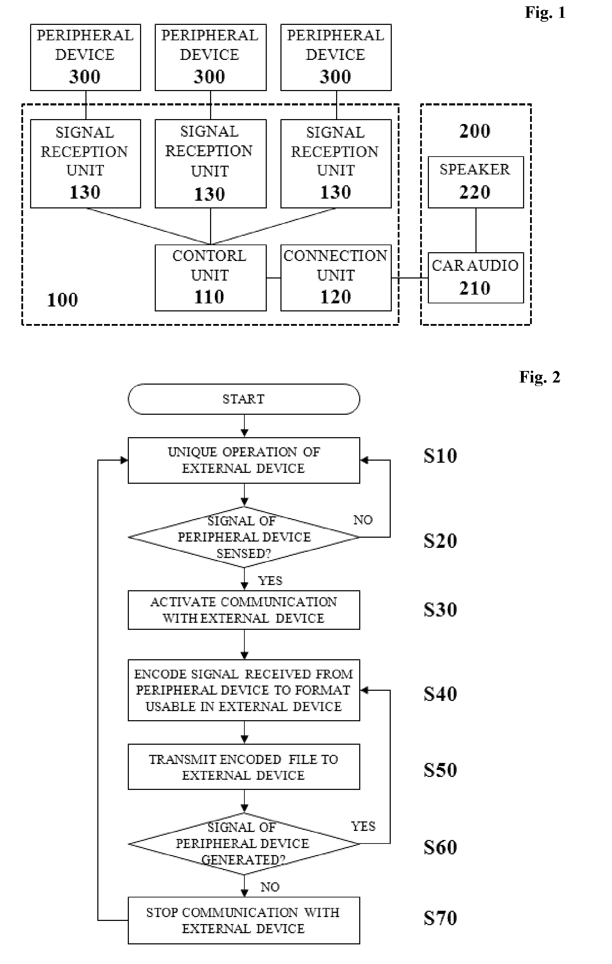

FIG. 1 is a conceptual view of a signal converting apparatus using a faking file according to an embodiment (hereinafter, referred to as "signal converting apparatus") and peripheral components connected therewith. A signal converting apparatus 100 according to an embodiment of the present invention includes a connection unit 120, a signal reception unit 130 being a wired/wireless communication terminal, and a control unit 110.

The connection unit 120 of the present invention is a communication port connected with an external device 200. According to this embodiment, the connection unit 120 is a USB output terminal. The control unit 110 controls a signal received/transmitted through the USB output terminal. The connection unit 120 may include an extension cable connecting the output terminal with the body of the signal converting apparatus 100 or include any short range wireless communication means.

The external device 200 is not necessary element of the present invention, but is needed when using the signal converting apparatus 100 according to the present invention. The external device 200 may be a car audio, a navigation device, a plasma display panel (PDP), a portable multimedia player (PMP), or a digital TV. Furthermore, the external device 200 may be any device which can receive data having a file format through the connection unit 120, play back a sound or image included in the data to output the sound or image to a speaker or image display, respectively, or display the file name to a text display. The external device 200 may include a playback means for playing back files stored in a USB input terminal and an external USB memory which are connected with the connection unit 120, so as to play back a music file or video file stored in a USB memory device. The external device 200 may play back a music or video file of a USB memory automatically when a power is supplied, and the USB memory is connected through the USB input terminal, regardless of whether the external device 200 is performing its operation. In the present embodiment, it should be appreciated that the external device 200 connected with the signal converting apparatus 100 of the present invention is the most latter one.

The signal reception unit 130 is a communication means for communicating a signal with a variety of peripheral devices 300 connected with the signal converting apparatus 100. The signal reception unit 130 is an antenna for radio communication such as Bluetooth communication and Zigbee communication when communicating with the peripheral devices 300 in a wired manner. The signal reception unit 130 is also a wired communication terminal such as a USB terminal and an AUX terminal when communicating with the peripheral devices 300 in a wireless manner. The control unit 110 may control a signal transmitted/received to/from the signal reception unit 130. The signal converting apparatus according to the present embodiment may include at least one signal reception unit 130.

FIG. 2 is a flow chart of main operations of the signal converting apparatus 100 using the faking file of the present invention.

First, the external device 200 connected through the connection unit 120 of the signal converting apparatus 100 performs a unique operation (S 10). That is, for example, a car audio 210 performs a playback operation of a radio and a built-in CD player. In this case, the communication between the external device 200 and the signal converting apparatus 100 is inactivated. For reference, the external device 200 of the present invention can operate when the external device 200 receives a power but does not need to execute the unique operation.

When a signal of the peripheral device 300 is sensed (S20), the signal converting apparatus 100 (control unit 110) activates communication with the external device 200 through the connection unit 120 (S30). In this case, the external device 200 stops the unique operation.

The control unit 110 of the signal converting apparatus 100 encodes the signal, which is received from the peripheral device 200, to a file format (for example, WAV file) usable in the external device 200 (S40) and transmits the encoded file to the external device 200 through the connection unit 120 (S50). This is one of main operations which are performed by the control unit 110 of the signal converting apparatus 100. The control unit 110 may transmit a data file having a WAV file format which has been previously stored corresponding to the signal, depending on a kind of the peripheral device 300.

If the peripheral device 300 continues to generate a signal, the control unit 110 keeps encoding the signal and transmitting the file data (S40 to S50). If the peripheral device 300 stops generating a signal, the control unit 110 stops the communication with the external device 200 (S70) for the external device 200 to perform its unique operation again (S10).

Next, functions of the control unit 110 of the signal converting apparatus 100 will be described with reference to FIG. 1 and the above described processing order.

First, the control unit 110 controls communications through the connection unit 120 and the signal reception unit 130. That is, the control unit 110 includes a USB communication means if the output terminal of the connection unit 120 is a USB terminal. And also, the control unit 110 includes a communication means for communication control such as a Bluetooth communication mean, a Zigbee communication mean, and a USB communication mean for the communication of the signal reception unit 130.

Second, when receiving a signal received from the peripheral device 300 through the signal reception unit 130, the control unit 110 according to the present embodiment converts the received signal, or a signal stored in an embedded memory of the control unit 110 corresponding to the received signal, into faking file data having a file format usable in the external device 200 and then transmits the faking file to the external device 200 through the connection unit 120.

In particular, through an operation of transmitting by the control unit 110 a faking file to the external device 200, the external device 200 recognizes the signal converting apparatus 100 as a USB memory. And also, the external device 200 recognizes a signal transmitted from the signal converting apparatus 100 through the connection unit 120 as a file stored in a USB memory being played back. The operation of the control unit 110 may be accomplished using any one of the following two methods.

One is to return a signal as if the uppermost directory including at least one file, for example, corresponding to that the external device 200 searches a memory through USB communication to find a directory structure and a playable file. In this case, the external device 200 recognizes the uppermost directory as including one file and reads the memory to play back the file. The control unit 110 transmits a prepared signal through the connection unit 120 in synchronization with the memory read operation of the external device 200 in the same method as reading a file in memory.

The other is to include an embedded memory in the control unit 110 and store a temporary file being a faking file in the embedded memory. When the external device 200 searches a memory through USB communication, the control unit 110 returns information on the temporary file. The temporary file includes signal information transmitted to the external device 200. The external device 200 transmits the contents of the temporary file as a signal when receiving a file read instruction. Since other files may be stored in an embedded memory, depending on embodiments, the external device 200 may be controlled by the control unit 110 to recognize only a specific area in the embedded memory. Since the temporary file contains a signal to be transmitted to the external device 200, if the signal to be transmitted to the external device 200 is continuously generated, the control unit 110 may keep increasing the amount of files. However, the control unit 110 may delete the temporary file when a signal is not generated any longer from one peripheral device 300.

In general, if a USB-connected memory has one file, the external device 200, which receives information on a file from the signal converting apparatus 100 and plays back the file, plays back only the file. If the USB-connected memory has multiple files, the external device 200 plays back the files in the order of A, B and C. Thus, the external device 200 may be allowed to recognize the signal converting apparatus 100 according to the present embodiment as having only one file, thereby removing the confusion of the apparatus.

The external device 200 receiving information on a file from the signal converting apparatus 100 and playing back the file, displays the file name of a file being played back on its display (text LCD). The file name of a faking file is given when the control unit 110 generates the faking file. The file name is a message which is a text of general information on the peripheral device 300 receiving a signal and information in a signal received from the peripheral device 300 or a text message which has been stored in the control unit 110 corresponding to the signal received from the peripheral device 300 and which has been converted according to the signal. If only a message without sound or image is required to be displayed on a display, the external device 200 may be allowed to recognize a music file having no sound and having the file name being a message as being played back.

A faking file to be played back in the external device 200 may have a file format recognizable and playable in the external device 200. If a file format supported in the external device 200 is a music file, the file format may be MP3, WAW, or WAV. If the external device 200 includes a video display and supports playback of a video file, and a signal received from the peripheral device 300 is a video signal, the faking file may have a file format such as a WMA, AVI, and MP4. The control unit 110 includes an encoding unit for encoding a signal to any of the file formats. The encoding unit may encode a signal to one or more file formats and have a configuration where a basic file format can be changed in a setting of the signal converting apparatus 100. The encoding unit may update coding format in the setting thereof, thereby actively corresponding to the development of the external device 200 and encoding file formats.

When the external device 200 may display sound information such as a singer, album, and title being file information other than a file name and data on a text display, the control unit enables the file name of a faking file and sound information of the faking file transmitted to the external device 200 to contain all kinds of messages corresponding to a signal received from the peripheral device 300 according to an existing or following setting.

If the external device 200 includes a video display and can play back a video file, and a signal to be transmitted to the external device 200 is a video signal, then a faking signal has a video file format, and the control unit 110 may output all kinds of messages as a faking file of a subtitle file synchronized with a faking file of a video file. In this case, the control unit 110 may return a signal in which the external device 200 has a subtitle file synchronized with the faking file of the video file when the communication between the external device 200 and the signal converting apparatus 100 is electrically activated.

Third, the control unit 110 enables the external device 200 to recognize the communication between the connection unit 120 and the external device 200 as being connected or disconnected as necessary with a USB output terminal, the connection unit 120, being connected to a USB input terminal of the external device 200. The connection unit 110 in the present embodiment enables the external device 200 to recognize the communication as being disconnected by inactivating the connection unit 120 or a USB pull-up resistor included in the control unit 110. The connection unit 110 enables the external device 200 to recognize the communication as being connected by activating the USB pull-up resistor.

The control unit 110 connects and disconnects the communication to transmit a faking file to the external device 200 when the peripheral device 300 connected to the signal converting apparatus 100 of the present invention receives a signal or when the signal received from the peripheral device 300 satisfies predetermined conditions. That is, the control unit 110 connects the communication when a faking file is transmitted to the external device 200. When a faking file is not transmitted to the external device 200, the control unit 110 enables the external device 200 to recognize an external USB memory as not being connected although the signal converting apparatus 100 of the present invention is coupled. When data is transmitted to the external device 200, the control unit 110 enables the external device 200 to recognize the external USB memory as being coupled by a user, to automatically play back a file stored in the external USB memory, and hence to spontaneously play back a faking file which includes a signal to be transmitted from the control unit 110.

When the peripheral device 300 stops generating a signal, the external device 200 may be allowed to recognize a faking file as being transmitted or deleted. When the communication is disconnected, and there is an operation before disconnected, the external device 200 may keep performing the operation. When the USB memory is removed, performing an operation which was performed before connecting a USB is a basic operation of the car audio 210 playing back a music file in the USB memory, typically.

Fourth, the control unit 110 prioritizes two or more signal reception unit 130. When a signal is received from a signal reception unit 130 with high priority while a signal received from a signal reception unit 130 with low priority is being transmitted, the signal received from the signal reception unit 130 with low priority is stopped to be delivered, and the signal received from the signal reception unit 130 with high priority is delivered. When signals are simultaneously received from two or more signal reception units 130, the data format of only a signal received from a signal reception unit 130 with high priority is converted, and transmitted to the external device 200 through the connection unit 120. The priority determination may be changed by a user in a setting of the signal converting apparatus 100.

In particular, when a signal is received from a signal reception unit 130 with high priority while a signal received from a signal reception unit 130 with low priority is being transmitted, and a message displayed on a display of the external device 200 is changed, an end code of a file for the transmission of a signal received from the signal reception unit 130 with low priority is transmitted, and information on a file for the transmission of a signal received from the signal reception unit 130 with high priority is transmitted to the external device 200, thereby playing back a new file including the signal received from the signal reception unit 130 with high priority.

Depending on embodiments, signals may be simultaneously or continuously received from two or more signal reception units 130 which have the same priority. In this case, the signals may be converted into a file format incorporating signals corresponding to the plurality of signals without one of them being ignored, and transmitted to the external device 200.

Hereinafter, the detailed configuration and operations of the signal converting apparatus 100 of the present embodiments will be described according to detailed examples of the peripheral device 300 connected to the signal converting apparatus 100 in wired/wireless communications. In particular, in the present example, a method of transmitting a music file (WAV format) except for video to the car audio 210 being the external device 200 in USB communication will be described.

<Example 1>

When a cell phone is connected as the peripheral device 300 in Bluetooth communication, the cell phone is wirelessly connected with the signal converting apparatus 100 in Bluetooth communication. If a cell phone is connected as the peripheral device 300, but is not in communication, the signal converting apparatus 100 disconnects the cell phone from the car audio 210. However, if the cell phone is in communication, the signal converting apparatus 100 electrically connects the cell phone with the car audio 210 via USB communication and enables the car audio 210 to recognize a USB memory as being coupled. The car audio 210 recognizing the signal converting apparatus 100 as a USB memory searches for a playback file in the USB memory. The signal converting apparatus 100 encodes a voice signal received from the cell phone via Bluetooth communication to convert the voice signal into faking file data having a WAV format. And also, with the name of the faking file being a recipient's phone number or name, the signal converting apparatus 100 transmit the faking file to the car audio 210 via USB communication. A voice signal received from the cell phone is continuously encoded and added to the rear of the faking file data, and thus the faking file corresponding to the voice signal of the car audio 210 keeps being played back. In this case, the car audio 210 displays a telephone number or name of a recipient corresponding to the name of the faking file on a display, and delivers the decoded analog amplified signal of a faking file being played back to the speaker.

Since only a reception voice is transmitted to the speaker 220 of a vehicle through a hands-free using the signal converting apparatus 100, a microphone for collecting a transmission voice in the signal converting apparatus 100 and converting the transmission voice into an electrical signal may be added as the peripheral device 300. In this case, the microphone is connected to the signal reception unit 130 of the signal converting apparatus 100 in wired or wireless communication, and the control unit 110 of the signal converting apparatus 100 does not process the signal although a signal is continuously received from the microphone. The control unit 110 of a signal processing unit processes the signal of the microphone and transmits the processed signal to a cell phone via Bluetooth communication when a cell phone is in communication. The microphone used in a hands-free is different from the peripheral device 300 of the signal converting apparatus 100. The microphone may be attached to the specific portion of the signal reception unit 130 or built in the signal converting apparatus 100

The signal converting apparatus 100 according to the present invention is required to have a call button or call end button which initiates or stops a call to operate as a handsfree. The call button may be included in a microphone connected to the special signal reception unit 130 and built in the signal converting apparatus 100.

When a call request signal is received from the cell phone to the signal converting apparatus 100 via Bluetooth communication, an operation in a communication state is performed except for a signal processing of a microphone. When a call button is pushed, the signal from the microphone is processed and then the processed signal starts being transmitted to the cell phone.

When a user push a call end button to end a call or stop the communication with the cell phone, the signal converting apparatus 100 stops processing the signal of the microphone, electrically disconnects the connection with the car audio 210, if necessary, deletes a faking file.

<Example 2>

When a navigation device is coupled as the peripheral device 300, the navigation device delivers an analog sound signal to the signal reception unit 130. The control unit 110 activates an electrical connection with the car audio 210, converts the analog sound signal into a digital signal, encodes the digital signal to a faking file data having a WAW format, and transmits the faking file to the car audio 210. As a result, the car audio 210 can output the sound signal of the navigation device through the speaker 220 of a vehicle. In this case, the name of the faking file may be an explanation about the peripheral device such as a navigation guide. However, the control unit 110 recognizes a standardized analog sound signal of the navigation device and displays a detailed guide message, for example, 'Turn right', 'Turn left', and 'Be careful 100km ahead' corresponding to each sound signal as a file name on a display of the car audio 210. If a signal provided in the navigation device is not an analog sound signal but a digital signal, the above mentioned output process of the sound and guide message is more simplified.

<Example 3>

When the peripheral device 300 is a music player such as a MP3 player or a video file such as a DVD player, the digital or analog sound signal output may be connected to the signal reception unit 130 of the signal converting apparatus 100. When a music or video player is operated, and a sound signal is received by a signal reception unit 130, the signal converting apparatus 100 activates an electrical connection with the car audio, encodes the sound signal to converts the sound signal into a faking file data, and transmits the faking file to the car audio 210. As a result, the car audio 210 can output the sound signal of the music or video player through the speaker 220 of a vehicle. When the signal output from the music or video player is an analog sound signal, the control unit 110 converts the analog sound signal into a digital sound signal and then encodes the digital sound signal to a faking file data. Also, the name of the faking file may be simply an 'external playback device', and the name of the faking file may be the name of the faking file when the music or video player outputs a digital signal and also information (simply, file name or singer, and title) on the playback file.

<Example 4>

When the peripheral device 300 is a USB memory, and the USB memory is connected to the signal reception unit 130, the signal converting apparatus 100 may activate an electrical connection with the car audio 210, search for a file in the USB memory, and transmit the file data necessary for playback to the car audio 210. If necessary, the car audio 210 may be allowed to recognize the USB memory coupled as the peripheral device 300 as be coupled without the signal converting apparatus 100.

<Example 5>

When a front or rear distance sensor is the peripheral device 300, the front or rear distance sensor is connected to the signal reception unit 130 of the signal converting apparatus via all kinds of communication manners such as CAN communication, serial communication, or direct analog input. When the front or rear distance sensor senses an approaching object and transmits the distance information to the signal converting apparatus 100, the signal converting apparatus 100 activates an electrical connection with the car audio 210, transmits a previously stored alarm sound as a faking file data to the car audio 210, and transmits indication on whether front or rear and indication on the distance as the name of the faking file to the car audio 210 directly or when the signal satisfies a predetermined conditions, that is, the distance from the object is within a certain value. The electrical connection with the car audio 210 is kept while the front or rear distance sensor is sensing an object. If the distance is changed, the front or rear distance sensor transmits an end signal of previous file data and then transmits a new faking file which has a file name and an alarm sound file data corresponding to the distance to the car audio 210.

<Example 6>

All kinds of vehicular sensors may be the peripheral sensor 300, and is connected to the signal reception unit 130 via a variety of communication manners such as CAN communication, serial communication, or direct analog input. In this case, the signal converting apparatus 100 operates as a self diagnosis device. The control unit 110 activates an electrical connection with the car audio 210, transmits an alarm sound as a faking file data to the car audio 210, and transmits the name of a failure part and the contents of the failure as the name of the faking file to the car audio 210 when a signal received from the vehicular sensor is a failure signal. When the alarm sound is kept during a certain time period, the control unit 110 may stop an electrical connection with the car audio 210. Although the failure signal is kept from the vehicular sensor, the control unit 110 may ignore the signal and, after the certain time period, transmit the faking file such as the alarm sound. Furthermore, when the signal converting apparatus 100 operates as a self diagnosis device, the signal received from the vehicular sensor is stored and updated in a volatile memory of the control unit 110 in FIFO (First In, First Out) order. If a failure occurs, a signal stored in the volatile memory at that time may be stored in the non-volatile memory in the order of storage. In this case, the control unit 110 may store the failure part and the failure content in a non-volatile memory and execute operations according to the OBD-II regulation.

A radio device and a microphone having a karaoke function may be considered as the peripheral device 300.

The signal conversion apparatus using a faking file according to the present invention advantageously provides a simple connection path, thereby connecting with the inner wiring with complicated wirings being excluded when a peripheral device uses a speaker of a vehicle connected to a car audio.

The signal conversion apparatus using a faking file according to the present invention may advantageously use a typical car audio capable of playing back a USB memory and does not require a car audio having a special configuration when various peripheral device is connected to the car audio.

The signal conversion apparatus using a faking file according to the present invention may advantageously deliver an audio signal or video signal to a car audio and also be utilized as a handsfree, a front or back distance alarm device, and a self diagnosis device.

The signal conversion apparatus using a faking file according to the present invention advantageously enables an audio signal of a peripheral device to be output to a speaker through a car audio by manipulate only the peripheral device without the car audio being separately manipulated.

The above-disclosed subject matter is to be considered illustrative, and not restrictive, and the appended claims are intended to cover all such modifications, enhancements, and other embodiments, which fall within the true spirit and scope of the present invention. Thus, to the maximum extent allowed by law, the scope of the present invention is to be determined by the broadest permissible interpretation of the following claims and their equivalents, and shall not be restricted or limited by the foregoing detailed description.

## Claims

1. A signal converting apparatus using a faking file, the signal converting apparatus comprising:
a connection unit connected with an external device; a signal reception unit receiving a digital or analog signal from a peripheral device via wired or wireless communication; and
a control unit generating a faking file corresponding to the signal and transmitting the faking file to the external device through the connection unit when the signal reception unit receives the signal from the external device,
wherein the faking file comprises one or both of audio data and video data.

2. The signal converting apparatus of claim 1, wherein the control unit adds data corresponding to a predetermined condition to the faking file and transmits the faking file to the external device through the connection unit when the signal reception unit receives the signal from the peripheral device and the signal satisfies the predetermined condition.

3. The signal converting apparatus of claim 1, wherein,
the peripheral device is a cell phone,
the signal reception unit is connected to the cell phone via Bluetooth communication to receive a reception voice signal of the cell phone and the name or phone number of a recipient, and
the faking file has the reception voice signal decoded to a format of the faking file as data, and the name or phone number of the recipient as the file name.

4. The signal converting apparatus of claim 1, wherein,
the peripheral device is an output device of a sound signal, and
data of the faking file is the sound signal decoded to a format of the faking file.

5. The signal converting apparatus of claim 4, wherein,
the sound signal is an analog sound signal,
the control unit converts the analog sound signal into a digital sound signal, and
the data of the faking file is the digital sound signal decoded to the format of the faking file.

6. The signal converting apparatus of claim 2, wherein,
the peripheral device is a front or rear distance sensor,
the predetermined condition is that a distance from an object through a signal received from the distance sensor is in a certain range,
the data is an alarm sound stored in the control unit corresponding to a distance from the object, and
the name of the faking file is the distance from the object.

7. The signal converting apparatus of claim 2, wherein,
the peripheral device is a vehicular sensor,
the predetermined condition is that a signal received from the vehicular sensor satisfies a failure condition of the vehicle,
the data is an alarm sound stored in the control unit corresponding to a kind of the failure, and
the name of the faking file is information on the failure.

8. The signal converting apparatus of any one of the claims 1 and 2, wherein the control unit enables a message predetermined corresponding to the signal to be the name of the faking file.

9. The signal converting apparatus of any one of the claims 1 to 7, wherein the control unit electrically disconnects communication between the connection unit and the external device when the faking file is not transmitted to the external device, and electrically connects the communication between the connection unit and the external device when the faking file is transmitted to the external device.

10. The signal conversion apparatus of the claim 9, wherein,
the connection unit comprises a USB output terminal for USB communication with the external device, and
the control unit comprises a USB communication controller,
the control unit electrically connecting or disconnecting the communication between the connection unit and the external device by activating or deactivating a USB pull-up resistor.

11. The signal converting apparatus of any one of the claims 1 and 7, wherein the signal reception unit is configured as two or more, and the control unit prioritizes the signal reception units, and when signals are received from two or more of the signal reception unit, transmits only data corresponding to a signal with high priority to the external device.

12. An operating method of a signal conversion apparatus using a faking file, the operating method comprising:
a first step of supplying power to an external device, connecting the signal conversion apparatus using the faking file to the external device, and deactivating communication therebetween;
a second step of receiving an analog or digital signal from a peripheral device connected to the signal conversion apparatus using the faking file via wired or wireless communication;
a third step of generating, by the signal conversion apparatus, generating a faking file with audio or video data and file name corresponding to the signal;
a fourth step of activating, by the signal conversion apparatus, communication with the external device;
a fifth step of transmitting, by the signal conversion apparatus, the faking file to the external device; and
a sixth step of playing back, by the external device, the faking file.

13. The operating method of claim 12, wherein the signal conversion apparatus generates the faking file in the third step when the signal satisfies a predetermined condition of the signal conversion apparatus.

14. The operating method of claim 12, further comprising:
a seventh step of stopping receiving the signal; and
an eighth step of disconnecting, by the signal conversion apparatus, communication with the external device.

15. The operating method of claim 13, further comprising:
a seventh step of receiving the signal not satisfying the predetermined condition; and
an eighth step of disconnecting, by the signal conversion apparatus, communication with the external device.
